# EUROPEAN PATENT APPLICATION

(11) **EP 4 622 372 A1**
(43) Date of publication of application: **24.09.2025**
(21) Application number: 23910187.6
(22) Date of filing: 14.12.2023
(51) Int. Cl.: H04W 72/0446

(54) **COMMUNICATION METHOD AND APPARATUS BASED ON CONFIGURATION GRANT**

(30) Priority: 27.12.2022 CN 202211691694
(71) Applicant: Huawei Technologies Co., Ltd., Shenzhen, Guangdong 518129 (CN)
(72) Inventor: XU, Rui, Shenzhen, Guangdong 518129 (CN); QIN, Yi, Shenzhen, Guangdong 518129 (CN); CHEN, Erkai, Shenzhen, Guangdong 518129 (CN); CAO, Youlong, Shenzhen, Guangdong 518129 (CN)
(74) Representative: Gill Jennings & Every LLP
(86) International application number: PCT/CN2023/138866
(87) International publication number: WO 2024/140257

(57) **Abstract**

A configured grant-based communication method and apparatus are provided. The method includes: A terminal determines that amounts of data that a plurality of transmission occasions corresponding to a data frame can carry are greater than a data amount of the data frame, where the plurality of transmission occasions include a first transmission occasion and a second transmission occasion, and the second transmission occasion is after the first transmission occasion. Then, the terminal sends indication information to an access network device on the first transmission occasion, where the indication information indicates an adjustment to a time-frequency resource and/or an MCS of the second transmission occasion. In this way, after the access network device configures the plurality of transmission occasions for the terminal by using a configured grant, the foregoing method can implement a flexible and dynamic adjustment to the transmission occasions, thereby reducing resource wastes caused because the amounts of data that the plurality of transmission occasions corresponding to the data frame can carry are greater than the data amount of the data frame.

## Description

### CROSS-REFERENCE TO RELATED APPLICATIONS

This application claims priority to Chinese Patent Application No. 202211691694.9, filed with the China National Intellectual Property Administration on December 27, 2022 and entitled "CONFIGURED GRANT-BASED COMMUNICATION METHOD AND APPARATUS", which is incorporated herein by reference in its entirety.

### TECHNICAL FIELD

This application relates to the field of communication technologies, and in particular, to a configured grant-based communication method and apparatus.

### BACKGROUND

With continuous development of a wireless communication system, a data transmission delay is continuously reduced, and a transmission capacity is increasingly large. The wireless communication system gradually penetrates into some services with high requirements on real-time performance and a data capacity, such as video transmission, cloud gaming (cloud gaming, CG), and extended reality (extended reality, XR). The XR is an environment that combines the real world and the virtual world, that supports human-computer interaction, and that is generated by using a computer technology and a wearable device, and is a collective term of various forms such as augmented reality (augmented reality, AR), virtual reality (virtual reality, VR), and mixed reality (mixed reality, MR).

Using an XR service as an example, a video frame of the XR service may be transmitted between an access network device and a terminal through semi-persistent scheduling. However, data amounts of different video frames of the XR service may be different. Therefore, after the access network device configures a plurality of transmission occasions for the terminal through semi-persistent scheduling, an amount of data that a transmission occasion corresponding to the video frame can carry may not match a data amount of the video frame. For example, the amount of data that the transmission occasion corresponding to the video frame can carry is greater than the data amount of the video frame, causing resource wastes.

### SUMMARY

This application provides a configured grant-based communication method and apparatus, to adjust a time-frequency resource and/or an MCS of a transmission occasion, so as to reduce resource wastes.

According to a first aspect, an embodiment of this application provides a configured grant-based communication method. The method may be applied to a terminal or a component (for example, a circuit or a chip) in the terminal. The method may include: determining a plurality of transmission occasions, where the plurality of transmission occasions include a first transmission occasion and a second transmission occasion, and the second transmission occasion is after the first transmission occasion; sending indication information to an access network device on the first transmission occasion, where the indication information indicates an adjustment to a time-frequency resource and/or a modulation and coding scheme MCS of the second transmission occasion; and communicating with the access network device on the second transmission occasion based on an adjusted time-frequency resource and/or MCS of the second transmission occasion.

Generally, after configuring a transmission occasion for the terminal, the access network device may change a parameter (for example, a time-frequency resource and/or an MCS of the transmission occasion) of the transmission occasion only in a reactivation manner, and needs to change parameters of all subsequent transmission occasions. However, according to the method in this embodiment of this application, parameters of some transmission occasions may be temporarily adjusted (or in other words, a parameter of a transmission occasion is dynamically adjusted), and there is high flexibility. For example, in a scenario in which an amount of data that a transmission occasion corresponding to a data frame can carry is greater than a data amount of the data frame, parameters of some transmission occasions are temporarily adjusted, and this adjustment is notified to the access network device by using indication information, so that resource wastes can be effectively reduced, and power consumption of the terminal is reduced.

In a possible design, the plurality of transmission occasions are within one configured grant CG periodicity, or the plurality of transmission occasions are within a transmission periodicity of a data frame.

In this way, the plurality of transmission occasions are within a specific range of the CG periodicity or a transmission periodicity of the data frame, so that some or all transmission occasions in the specific range can be flexibly adjusted.

In a possible design, the first transmission occasion is a 1^{st} transmission occasion in the plurality of transmission occasions.

In this way, the terminal sends the indication information on the 1^{st} transmission occasion, so that more transmission occasions can be adjusted, and the access network device can learn of usage of a subsequent transmission occasion earlier, to allocate unused resources to another terminal and improve resource utilization.

In a possible design, the indication information includes one or more of the following: information indicating the second transmission occasion; and adjustment information for the time-frequency resource and/or the MCS of the second transmission occasion.

In a possible design, the information indicating the second transmission occasion includes: a CG index corresponding to the second transmission occasion; or a hybrid automatic repeat request HARQ process number corresponding to the second transmission occasion; or a position number of the second transmission occasion in the plurality of transmission occasions; or a bitmap, where each bit in the bitmap corresponds to one of the plurality of transmission occasions, and a value of a bit corresponding to the second transmission occasion is a preset value.

In this way, indicating the second transmission occasion by using the foregoing content is convenient to implement, and resource overheads can be effectively reduced.

In a possible design, the adjustment information for the time-frequency resource of the second transmission occasion includes an index of a first adjustment rule, and the first adjustment rule is used for adjusting a time domain resource and/or a frequency domain resource of the second transmission occasion.

In a possible design, the method further includes obtaining a plurality of adjustment rules, where the plurality of adjustment rules include the first adjustment rule.

In the foregoing manner, the plurality of adjustment rules are predefined or preconfigured, so that the terminal can adjust the transmission occasion more properly, thereby ensuring that an adjustment to the transmission occasion by the terminal is within a controllable range.

In a possible design, the adjustment information for the MCS of the second transmission occasion includes an index of the adjusted MCS of the second transmission occasion, or an offset between an index of the adjusted MCS of the second transmission occasion and an index of the MCS before the adjustment of the second transmission occasion.

In a possible design, the offset is less than or equal to an offset threshold.

In the foregoing manner, the offset threshold is predefined or preconfigured, so that the terminal can adjust the transmission occasion more properly, thereby ensuring that the adjustment to the transmission occasion by the terminal is within the controllable range.

In a possible design, the indication information further indicates an adjustment to a time-frequency resource and/or an MCS of the first transmission occasion. The method further includes: communicating with the access network device on the first transmission occasion based on an adjusted time-frequency resource and/or MCS of the first transmission occasion.

In this way, the indication information further indicates the adjustment to the time-frequency resource and/or the MCS of the first transmission occasion, so that an adjustment range is larger, to improve transmission performance.

According to a second aspect, an embodiment of this application provides a configured grant-based communication method. The method may be applied to an access network device or a component (for example, a circuit or a chip) in the access network device, or may be applied to a logical node, a logical module, or software that can implement all or some functions of the access network device. The method may include: determining a plurality of transmission occasions, where the plurality of transmission occasions include a first transmission occasion and a second transmission occasion, and the second transmission occasion is after the first transmission occasion; receiving indication information from a terminal on the first transmission occasion, where the indication information indicates an adjustment to a time-frequency resource and/or a modulation and coding scheme MCS of the second transmission occasion; and communicating with the terminal on the second transmission occasion based on an adjusted time-frequency resource and/or MCS of the second transmission occasion.

In a possible design, the plurality of transmission occasions are within one configured grant CG periodicity, or the plurality of transmission occasions are within a transmission periodicity of a data frame.

In a possible design, the first transmission occasion is a 1^{st} transmission occasion in the plurality of transmission occasions.

In a possible design, the indication information includes one or more of the following: information indicating the second transmission occasion; and adjustment information for the time-frequency resource and/or the MCS of the second transmission occasion.

In a possible design, the information indicating the second transmission occasion includes: a CG index corresponding to the second transmission occasion; or a hybrid automatic repeat request HARQ process number corresponding to the second transmission occasion; or a position number of the second transmission occasion in the plurality of transmission occasions; or a bitmap, where each bit in the bitmap corresponds to one of the plurality of transmission occasions, and a value of a bit corresponding to the second transmission occasion is a preset value.

In a possible design, the adjustment information for the time-frequency resource of the second transmission occasion includes an index of a first adjustment rule, and the first adjustment rule is used for adjusting a time domain resource and/or a frequency domain resource of the second transmission occasion.

In a possible design, the first adjustment rule is one of a plurality of adjustment rules.

In a possible design, the adjustment information for the MCS of the second transmission occasion includes an index of the adjusted MCS of the second transmission occasion, or an offset between an index of the adjusted MCS of the second transmission occasion and an index of the MCS before the adjustment of the second transmission occasion.

In a possible design, the offset is less than or equal to an offset threshold.

In a possible design, the indication information further indicates an adjustment to a time-frequency resource and/or an MCS of the first transmission occasion. The method further includes: communicating with the terminal on the first transmission occasion based on an adjusted time-frequency resource and/or MCS of the first transmission occasion.

It may be understood that the method described in the second aspect corresponds to the method described in the first aspect. For beneficial effects of related technical features in the second aspect, refer to the descriptions in the first aspect. Details are not described again.

According to a third aspect, this application provides a communication apparatus. The communication apparatus has a function for implementing the first aspect or the second aspect. For example, the communication apparatus includes a corresponding module, unit, or means for performing an operation in the first aspect or the second aspect. The module, unit, or means may be implemented by using software, may be implemented by using hardware, or may be implemented by using hardware executing corresponding software.

In a possible design, the communication apparatus includes a processing unit and a communication unit. The communication unit may be configured to receive and transmit a signal, to implement communication between the communication apparatus and another apparatus. The processing unit may be configured to perform some intemal operations of the communication apparatus. Functions performed by the processing unit and the communication unit may correspond to operations in the first aspect or the second aspect.

In a possible design, the communication apparatus includes a processor, and the processor may be coupled to a memory. The memory may store a computer program or instructions necessary for implementing the function in the first aspect or the second aspect. The processor may execute the computer program or the instructions stored in the memory. When the computer program or the instructions are executed, the communication apparatus is enabled to implement the method in any possible design or implementation of the first aspect or the second aspect.

In a possible design, the communication apparatus includes a processor and a memory. The memory may store a computer program or instructions necessary for implementing the function in the first aspect or the second aspect. The processor may execute the computer program or the instructions stored in the memory. When the computer program or the instructions are executed, the communication apparatus is enabled to implement the method in any possible design or implementation of the first aspect or the second aspect.

In a possible design, the communication apparatus includes a processor and an interface circuit. The processor is configured to: communicate with another apparatus through the interface circuit, and perform the method in any possible design or implementation of the first aspect or the second aspect.

It may be understood that, in the third aspect, the processor may be implemented by using hardware or software. When the processor is implemented by using the hardware, the processor may be a logic circuit, an integrated circuit, or the like. When the processor is implemented by using the software, the processor may be a general-purpose processor, and is implemented by reading software code stored in the memory. In addition, there may be one or more processors, and one or more memories. The memory may be integrated with the processor, or the memory and the processor are disposed separately. In a specific implementation process, the memory and the processor may be integrated into one chip, or may be disposed on different chips. A type of the memory and a manner in which the memory and the processor are disposed are not limited in embodiments of this application.

According to a fourth aspect, this application provides a communication system. The communication system may include a terminal and an access network device. The terminal is configured to perform the communication method provided in the first aspect, and the access network device is configured to perform the communication method provided in the second aspect.

According to a fifth aspect, this application provides a computer-readable storage medium. The computer storage medium stores computer-readable instructions. When a computer reads and executes the computer-readable instructions, the computer is enabled to perform the method in any one of the possible designs of the first aspect or the second aspect.

According to a sixth aspect, this application provides a computer program product. When a computer reads and executes the computer program product, the computer is enabled to perform the method in any one of the possible designs of the first aspect or the second aspect.

According to a seventh aspect, this application provides a chip. The chip includes a processor. The processor is coupled to a memory, and is configured to read and execute a software program stored in the memory, to implement the method in any one of the possible designs of the first aspect or the second aspect.

### BRIEF DESCRIPTION OF DRAWINGS

FIG. 1 is a diagram of a network architecture to which an embodiment of this application is applicable;
FIG. 2A is a diagram of transmission of a plurality of video frames according to an embodiment of this application;
FIG. 2B shows an example of a transmission occasion corresponding to a data frame according to an embodiment of this application;
FIG. 2C shows still another example of a transmission occasion corresponding to a data frame according to an embodiment of this application;
FIG. 2D shows still another example of a transmission occasion corresponding to a data frame according to an embodiment of this application;
FIG. 2E shows still another example of a transmission occasion corresponding to a data frame according to an embodiment of this application;
FIG. 2F shows an example of a resource waste case according to an embodiment of this application;
FIG. 3 is a schematic flowchart corresponding to a communication method according to an embodiment of this application;
FIG. 4 shows an example of an adjustment manner according to an embodiment of this application;
FIG. 5 is a block diagram of a possible example of an apparatus according to an embodiment of this application;
FIG. 6 is a diagram of a structure of a terminal according to an embodiment of this application; and
FIG. 7 is a diagram of a structure of an access network device according to an embodiment of this application.

### DESCRIPTION OF EMBODIMENTS

Technical solutions in embodiments of this application are described below with reference to the accompanying drawings in embodiments of this application. The technical solutions in embodiments of this application may be applied to various communication systems, such as a universal mobile telecommunications system (universal mobile telecommunications system, UMTS), a wireless local area network (wireless local area network, WLAN), a wireless fidelity (wireless fidelity, Wi-Fi) system, a 4th generation (4th generation, 4G) mobile communication system, for example, a long term evolution (long term evolution, LTE) system, a 5th generation (5th generation, 5G) mobile communication system, for example, a new radio (new radio, NR) system, and a future evolved communication system, for example, a 6th generation (6th generation, 6G) mobile communication system.

All aspects, embodiments, or features are presented in this application by describing a system that may include a plurality of devices, components, modules, and the like. It should be appreciated and understood that each system may include another device, component, module, and the like, and/or may not include all devices, components, modules, and the like discussed with reference to the accompanying drawings. In addition, a combination of these solutions may be used.

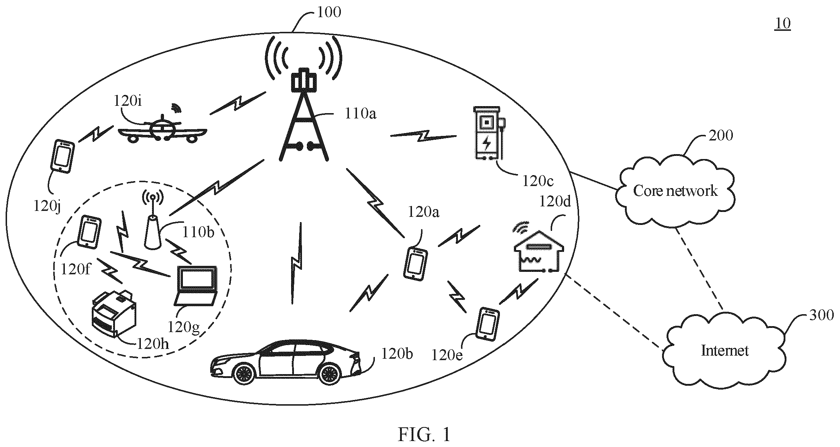

For ease of understanding embodiments of this application, FIG. 1 is a possible and non-limiting diagram of a system. As shown in FIG. 1, a communication system 10 includes a radio access network (radio access network, RAN) 100 and a core network (core network, CN) 200. Optionally, the communication system 10 may further include an internet 300.

The RAN 100 includes at least one RAN node (for example, 110a and 110b in FIG. 1 that are collectively referred to as 110) and at least one terminal (for example, 120a to 120j in FIG. 1 that are collectively referred to as 120). 110a is a base station, 110b is a micro base station, 120a, 120e, 120f, and 120j are mobile phones, 120b is a vehicle, 120c is a fuel dispenser, 120d is a home access node (home access point, HAP) deployed indoors or outdoors, 120g is a notebook computer, 120h is a printer, and 120i is an uncrewed aerial vehicle.

The RAN 100 may further include other RAN nodes, for example, a wireless relay device and/or a wireless backhaul device (not shown in FIG. 1). The terminal 120 is connected to a RAN node 110 in a wireless manner. The RAN node 110 is connected to a core network 200 in a wireless or wired manner. A core network device in the core network 200 and the RAN node 110 in the RAN 100 may be different physical devices, or may be a same physical device that integrates a core network logical function and a radio access network logical function.

The RAN 100 may be a cellular system related to a 3rd generation partnership project (3rd generation partnership project, 3GPP), for example, a 4G or 5G mobile communication system, or a future-oriented evolved system (for example, a 6G mobile communication system). Alternatively, the RAN 100 may be an open access network (open RAN, O-RAN, or ORAN), a cloud radio access network (cloud radio access network, CRAN), or a wireless fidelity (wireless fidelity, Wi-Fi) system. Alternatively, the RAN 100 may be a communication system that integrates the foregoing two or more systems.

The RAN node 110 may also be sometimes referred to as a RAN entity, an access node, or the like, and forms a part of the communication system, to help a terminal implement radio access. A plurality of RAN nodes 110 in the communication system 10 may be nodes of a same type, or may be nodes of different types. In some scenarios, roles of the RAN node 110 and the terminal 120 are relative. For example, a network element 120i in FIG. 1 may be a helicopter or an uncrewed aerial vehicle, and may be configured as a mobile base station. For a terminal 120j that accesses the RAN 100 via the network element 120i, the network element 120i is a base station. However, for a base station 110a, the network element 120i is a terminal. The RAN node 110 and the terminal 120 are sometimes referred to as communication apparatuses. For example, the network element 110a and the network element 110b in FIG. 1 may be understood as communication apparatuses having a base station function, and a network element 120a to the network element 120j may be understood as communication apparatuses having a terminal function.

The RAN node may also have different expressions, for example, an access network device. In this application, unless otherwise specified, the access network device is used for expression.

In a possible scenario, the access network device may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6G mobile communication system, a base station in a future mobile communication system, an access node in a Wi-Fi system, or the like. The access network device may be a macro base station (for example, 110a in FIG. 1), a micro base station or an indoor station (for example, 110b in FIG. 1), a relay node or a donor node, or a radio controller in a CRAN scenario. Optionally, the access network device may alternatively be a server, a wearable device, a vehicle, a vehicle-mounted device, or the like. For example, an access network device in a vehicle-to-everything (vehicle-to-everything, V2X) technology may be a road side unit (road side unit, RSU). All or some functions of the access network device in this application may alternatively be implemented via a software function running on hardware, or may be implemented via a virtualization function instantiated on a platform (for example, a cloud platform). Alternatively, the access network device in this application may be a logical node, a logical module, or software that can implement all or some functions of the access network device.

In another possible scenario, a plurality of access network devices cooperate to assist the terminal in implementing radio access, and different access network devices respectively implement some functions of the base station. For example, the access network device may be a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings of the names. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination thereof.

The terminal may alternatively be referred to as a terminal device, user equipment (user equipment, UE), a mobile station, a mobile terminal, or the like. The terminal may be widely used in various scenarios, for example, device-to-device (device-to-device, D2D), vehicle-to-everything (vehicle-to-everything, V2X) communication, machine-type communication (machine-type communication, MTC), internet of things (internet of things, IOT), virtual reality, augmented reality, industrial control, self-driving, telemedicine, a smart grid, smart furniture, a smart office, smart wearable, smart transportation, and a smart city. The terminal may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A device form of the terminal is not limited in embodiments of this application.

In embodiments of this application, "sending information to... (a terminal)" may be understood as that a destination end of the information is the terminal, and may include directly or indirectly sending information to the terminal. "Receiving information from... (a terminal)" may be understood as that a source end of the information is the terminal, and may include directly or indirectly receiving information from the terminal. Information may be processed as necessary between a source end in which the information is sent and a destination end For example, the processing is a format change. However, the destination end may understand valid information from the source end. Similar descriptions in this application may be understood similarly, and details are not described herein again.

The communication system and a service scenario described in embodiments of this application are intended to describe the technical solutions in embodiments of this application more clearly, and do not constitute a limitation on the technical solutions provided in embodiments of this application. A person of ordinary skill in the art may learn that the technical solutions provided in embodiments of this application are also applicable to similar technical problems as a network architecture evolves and a new service scenario emerges.

The following first explains related terms in embodiments of this application. It should be noted that these explanations are intended to make embodiments of this application easier to understand, but should not be considered as a limitation on the protection scope claimed in this application.

### 1. Data frame

A data frame may also be referred to as a data slice (slice) or a data tile (tile). For a service (for example, an XR service), the service may include at least one data frame or at least one protocol data unit (protocol data unit, PDU) set (PDU set), and one PDU set may include at least one data frame.

In embodiments of this application, the data frame may be a video frame, an audio frame, or another possible frame.

### (1) Transmission periodicity of a data frame

An example in which a data frame is a video frame is used. A video may be composed of consecutive images (pictures, photos, or the like) played consecutively. When 24 images are quickly played per second, human eyes consider that the images are consecutive images (that is, a video). A frame rate indicates a quantity of images played per second. For example, when the frame rate is 24 frames per second (frame per second, FPS), it indicates that 24 images are played per second; when the frame rate is 60 FPS, it indicates that 60 images are played per second; and so on.

Using an XR service as an example, a service model of the XR service is usually that a video frame arrives periodically based on a frame rate. When the frame rate is 60 FPS, in an ideal case, a transmission periodicity of the video frame is 1000/60=50/3 milliseconds (ms), approximately equal to 16.67 ms, that is, one video frame arrives every 16.67 ms.

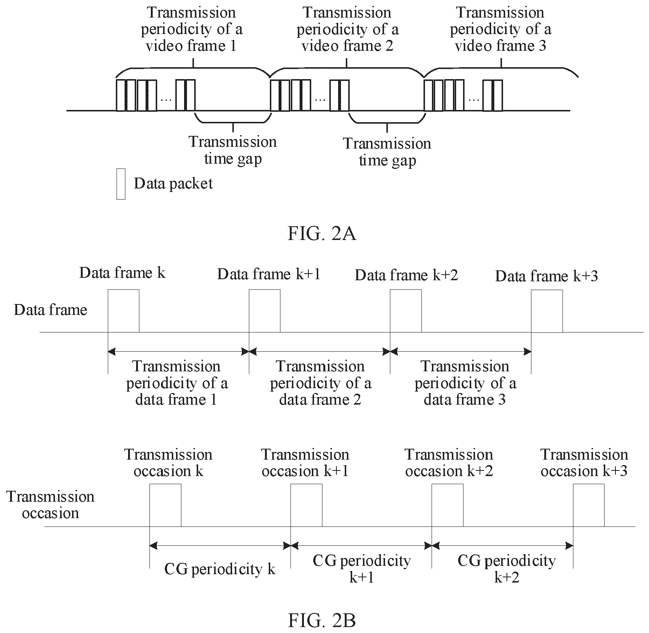

FIG. 2A is a diagram of transmission of a plurality of video frames. As shown in FIG. 2A, a video frame 1, a video frame 2, and a video frame 3 are three consecutive video frames. For example, if a frame rate is 60 FPS, a transmission periodicity of a video frame is 1000/60=50/3 milliseconds (ms), approximately equal to 16.67 ms. The video frame 1 is used as an example. The video frame 1 includes a plurality of data packets. For example, the plurality of data packets may be distributed in a first segment of a transmission periodicity of the video frame 1 (for example, the plurality of data packets may be distributed in the first 8 ms of 16.67 ms). In other words, a transmission time gap (gap) may exist between different video frames.

### (2) Data amount of a data frame

An example in which a data frame is a video frame is still used. One video frame may be understood as one image. One video frame may include one or more data packets corresponding to one image, and a data amount of one video frame is a sum of data amounts of the one or more data packets included in the video frame.

Further, data amounts of different video frames of a same service may be different. There are a plurality of reasons for a difference in data amounts of different video frames. For example, for two consecutive video frames (for example, the video frame 1 and the video frame 2 in FIG. 2A), compression ratios of the video frame 1 and the video frame 2 may be different, and coding types may also be different (for example, a coding type of the video frame 1 is intra coding, and a coding type of the video frame 2 is inter prediction coding). Consequently, data amounts of the video frame 1 and the video frame 2 are different.

### 2. Semi-persistent scheduling

An access network device may schedule uplink and downlink transmission resources for a terminal in two manners: dynamic scheduling and semi-persistent scheduling. In the dynamic scheduling, the access network device may send control information to the terminal by using a control channel, to allocate a transmission parameter of a data channel to the terminal. The control channel is, for example, a physical downlink control channel (physical downlink control channel, PDCCH). The control information may be, for example, downlink control information (downlink control information, DCI). The data channel may be, for example, a physical downlink shared channel (physical downlink shared channel, PDSCH) or a physical uplink shared channel (physical uplink shared channel, PUSCH). For example, the control information may indicate a time-frequency position to which the data channel is mapped (for example, a time domain symbol or a frequency domain resource block (resource block, RB) to which the data channel is mapped), so that the access network device and the terminal may transmit downlink data (for example, data carried on the PDSCH) and/or uplink data (for example, data carried on the PUSCH) through the data channel at the time-frequency position.

In the semi-persistent scheduling, the access network device may allocate periodic uplink and downlink transmission resources to the terminal. Semi-persistent scheduling for allocating an uplink transmission resource may be referred to as a configured grant (configured grant, CG), and semi-persistent scheduling for allocating a downlink transmission resource may be referred to as semi-persistent scheduling (semi-persistent scheduling, SPS). Further, for an uplink, a transmission resource for performing one uplink transmission may be referred to as an uplink transmission occasion (which may be referred to as a transmission occasion for short), and the uplink transmission occasion may alternatively be replaced with another possible description, for example, a CG resource, a PUSCH resource, a PUSCH opportunity, or a PUSCH occasion. For a downlink, a transmission resource for performing one downlink transmission may be referred to as a downlink transmission occasion (which may be referred to as a transmission occasion for short), and the downlink transmission occasion may alternatively be replaced with another possible description, for example, an SPS resource, a PDSCH resource, a PDSCH opportunity, or a PDSCH occasion.

### (1) CG

For a CG, in a possible implementation, the access network device may first configure some of parameters (such as a CG periodicity and a CG index) of at least one set of transmission occasions for the terminal by using a radio resource control (radio resource control, RRC) message. For example, the RRC message may include a ConfiguredGrantConfig (or CG-Config) field corresponding to each of the at least one set of transmission occasions, and parameters such as a CG periodicity and a CG index of each set of transmission occasions may be carried in a CG-Config field corresponding to the set of transmission occasions. One set of transmission occasions may include a plurality of transmission occasions that periodically appear. The CG index is used to distinguish between different sets of transmission occasions, and a same set of transmission occasions corresponds to a same CG index. The CG index may be configured by using a ConfiguredGrantConfigIndex parameter in the ConfiguredGrantConfig field. The CG index may also have another possible name, and this is not limited in embodiments of this application.

Further, for each of the at least one set of transmission occasions, the access network device may send an activation command to the terminal. The activation command is used for activating the set of transmission occasions, and the activation command may be, for example, DCI in a PDCCH. For example, the activation command may include other parameters of the set of transmission occasions. For example, the other parameters include a parameter 1 and a parameter 2. The parameter 1 indicates a frequency domain position of each transmission occasion in the set of transmission occasions. Frequency domain positions of different transmission occasions belonging to a same set of transmission occasions are the same. In other words, different transmission occasions belonging to a same set of transmission occasions completely overlap in frequency domain. In other words, different transmission occasions have a same frequency domain start position, a same frequency domain end position, and a same frequency domain width. A frequency domain width of a transmission occasion may be a quantity of consecutive RBs included in the transmission occasion in frequency domain. The parameter 2 indicates a time domain position of each transmission occasion in the set of transmission occasions. Different transmission occasions belonging to a same set of transmission occasions have a same time domain length. A time domain length of a transmission occasion may be a quantity of consecutive symbols of the transmission occasion in time domain.

The parameter 1 may indicate a frequency domain position of a transmission occasion in a plurality of manners. For example, in Manner 1, the parameter 1 includes a bitmap, and the bitmap indicates a resource block group (resource block group, RBG) included in a transmission occasion; and in Manner 2, the parameter 1 includes a resource indication value (resource indication value, RIV), and the RIV indicates a start RB (which may be represented as RBₛₜₐᵣₜ) of a transmission occasion and a quantity of consecutive RBs (which may be represented as L_{RB}) in frequency domain.

The parameter 2 may indicate a time domain position of a transmission occasion in a plurality of manners. For example, the parameter 2 includes a time domain resource assignment (time domain resource assignment, TDRA) field, and the TDRA field includes K0 and a start and length indicator value (start and length indicator value, SLIV). K0 indicates a slot (slot) offset between the PDCCH for carrying the activation command and a 1^{st} transmission occasion in the set of transmission occasions. The SLIV indicates a start symbol position of the 1^{st} transmission occasion in the set of transmission occasions and a time domain length of each transmission occasion in the set of transmission occasions.

In another possible implementation, the access network device configures a CG periodicity of each of the at least one set of transmission occasions and indicates a specific time-frequency position by using the RRC message. For example, the specific time-frequency position is indicated by using the parameter 1 and the parameter 2. In this case, the CG periodicity, the parameter 1, and the parameter 2 are all carried in the RRC message, and once the terminal correctly receives the RRC message, the configuration takes effect immediately (in other words, the configuration is activated immediately).

### (2) SPS

An implementation of SPS is similar to that of the CG. For example, the access network device may configure parameters such as a periodicity of at least one set of transmission occasions by using an RRC message. Then, for each of the at least one set of transmission occasions, the access network device may activate and indicate a time-frequency position of each transmission occasion in the set of transmission occasions by using DCI.

### 3. Enhanced semi-persistent scheduling technology

Different XR services have different uplink and downlink service models. For example, for a VR service, a display change of scene content is caused by a posture or a position (action) of a user. Therefore, uplink transmission mainly includes position and posture information, and a data amount is small, usually only dozens of kbps; and downlink transmission mainly includes a rendered video stream, and a data amount is large and may reach dozens to hundreds of Mbps. For an AR service, a display change of scene content is caused by a change of a fixation focus target and a change of a spatial relationship (action) between a position and a fixation point. Therefore, content of uplink transmission includes visual information (including a depth) required for perception. Uplink transmission mainly includes a clear and stable picture or video stream, and a data amount is large, or may include some extracted environment characteristic information.

The uplink transmission is used as an example. After the access network device configures and activates a set of transmission occasions for the terminal by using a CG, the terminal may send a data frame to the access network device on the set of transmission occasions. Generally, only one transmission occasion can be configured in each CG periodicity, that is, only one transport block (transport block, TB) can be transmitted in each CG periodicity. For example, the CG periodicity configured by the access network device matches a transmission periodicity of the data frame (where there may be a plurality of specific matching manners, for example, the CG periodicity and the transmission periodicity are the same, and this is not limited in embodiments of this application), so that one data frame corresponds to one transmission occasion, that is, one data frame is transmitted on one transmission occasion. For example, as shown in FIG. 2B, assuming that the CG periodicity is the same as the transmission periodicity of the data frame, the terminal may transmit a data frame k on a transmission occasion k, transmit a data frame k+1 on a transmission occasion k+1, transmit a data frame k+2 on a transmission occasion k+2, and so on.

However, for a service (for example, the AR service) with a large uplink data amount, if one transmission occasion is configured in one CG periodicity, data transmission may fail to be completed. To resolve this problem, embodiments of this application provide several enhanced semi-persistent scheduling technologies, to meet a transmission requirement of a large data amount. The following describes, with reference to Configuration manner 1 to Configuration manner 3, the enhanced semi-persistent scheduling technology provided in embodiments of this application.

### (1) Configuration manner 1

In Configuration manner 1, the access network device may configure a set of transmission occasions with a short CG periodicity for the terminal, to form dense transmission occasions, so that a transmission periodicity of each data frame includes a plurality of transmission occasions, and the terminal can have sufficient resources to transmit the data frame.

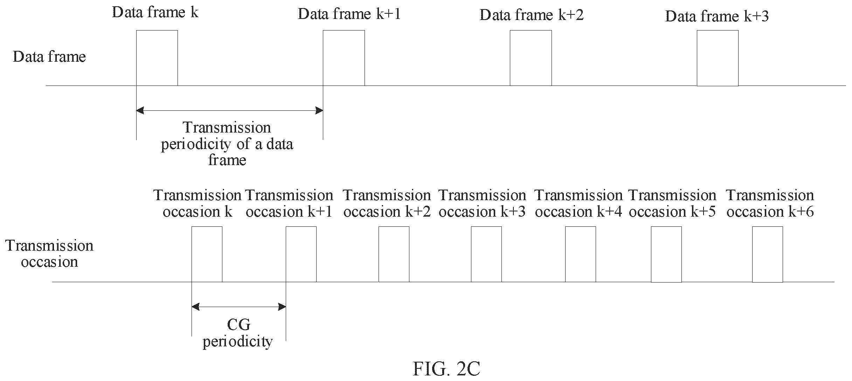

For example, refer to FIG. 2C. Assuming that the CG periodicity is equal to half of the transmission periodicity of the data frame, the transmission periodicity of each data frame includes two transmission occasions. For example, the terminal may transmit a data frame k on a transmission occasion k and a transmission occasion k+1, transmit a data frame k+1 on a transmission occasion k+2 and a transmission occasion k+3, transmit a data frame k+2 on a transmission occasion k+4 and a transmission occasion k+5, and so on.

### (2) Configuration manner 2

In Configuration manner 2, the access network device may configure a set of transmission occasions for the terminal, and each CG periodicity of the set of transmission occasions includes a plurality of transmission occasions, so that a transmission periodicity of each data frame includes a plurality of transmission occasions.

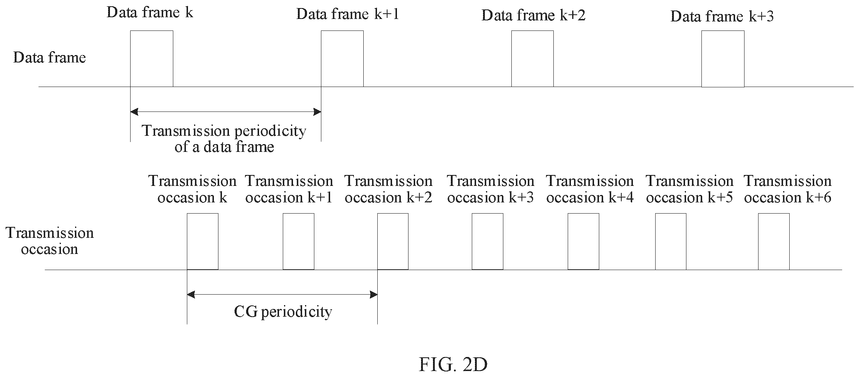

For example, refer to FIG. 2D. The CG periodicity is equal to the transmission periodicity of the data frame, one CG periodicity includes two transmission occasions, and the terminal may transmit a data frame on the two transmission occasions included in each transmission occasion. For example, the terminal transmits a data frame k on a transmission occasion k and a transmission occasion k+1, transmits a data frame k+1 on a transmission occasion k+2 and a transmission occasion k+3, transmits a data frame k+2 on a transmission occasion k+4 and a transmission occasion k+5, and so on.

### (3) Configuration manner 3

In Configuration manner 3, the access network device may configure, for the terminal, a plurality of sets of transmission occasions that have a same CG periodicity but different time domain start positions, so that a transmission periodicity of each data frame includes a plurality of transmission occasions.

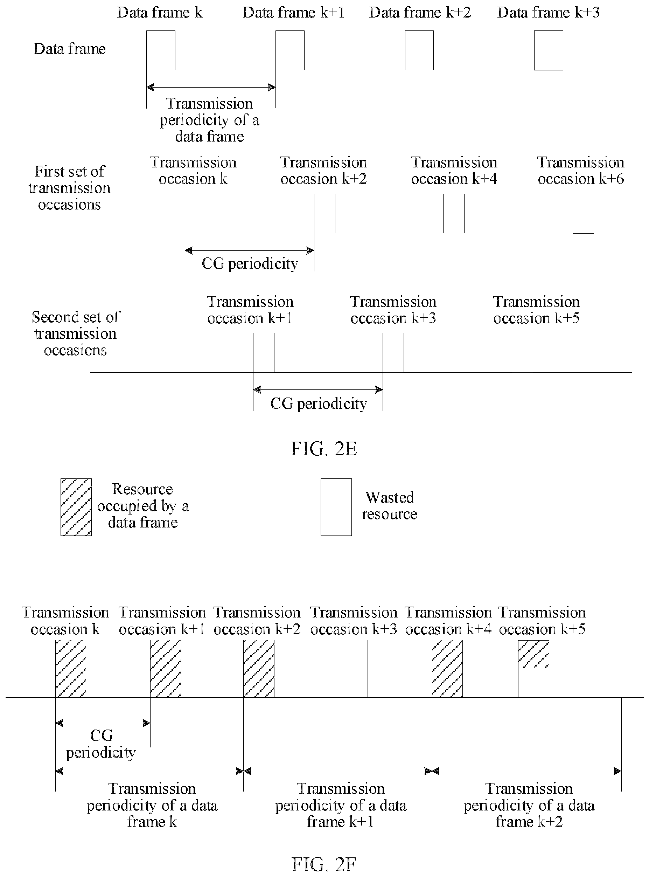

For example, refer to FIG. 2E. The access network device may configure, for the terminal, two sets of transmission occasions that have a same CG periodicity but different time domain start positions. A CG periodicity of a first set of transmission occasions and a CG periodicity of a second set of transmission occasions are both equal to the transmission periodicity of the data frame. For example, the terminal transmits a data frame k on a transmission occasion k and a transmission occasion k+1, transmits a data frame k+1 on a transmission occasion k+2 and a transmission occasion k+3, transmits a data frame k+2 on a transmission occasion k+4 and a transmission occasion k+5, and so on.

It may be understood that differences between Configuration manner 1, Configuration manner 2, and Configuration manner 3 and the semi-persistent scheduling described above are mainly described herein. For content other than the differences, refer to the semi-persistent scheduling described above.

### 4. Modulation and coding scheme corresponding to a transmission occasion

The access network device may indicate, to the terminal, a modulation and coding scheme (modulation and coding scheme, MCS) corresponding to a transmission occasion, so that the access network device and the terminal may transmit a data frame on the transmission occasion based on the MCS corresponding to the transmission occasion. Uplink transmission is used as an example. The access network device may indicate, to the terminal, an MCS corresponding to a transmission occasion configured for the terminal, and then the terminal may send a data frame to the access network device on the transmission occasion based on the MCS corresponding to the transmission occasion.

The access network device may indicate the MCS corresponding to the transmission occasion to the terminal in a plurality of manners. In a possible implementation, the access network device may send indication information 1 and indication information 2 to the terminal. The indication information 1 may indicate a target MCS table, and the indication information 2 may indicate a target MCS in the target MCS table. For example, the indication information 2 includes an index of the target MCS. Further, the terminal selects the target MCS table from a plurality of MCS tables based on the indication information 1, and determines the target MCS from the target MCS table based on the indication information 2. The target MCS is the MCS corresponding to the transmission occasion. The target MCS table may include a plurality of MCS indexes (for example, an MCS index 0 to an MCS index 27), and each MCS index may correspond to one modulation order and one target bit rate. For example, if the index of the target MCS included in the indication information 2 is 18, the terminal may determine that the target MCS is an MCS 18. For example, a modulation order corresponding to the MCS 18 is 4, a target bit rate corresponding to the MCS 18 is 490, and the MCS 18 may also be denoted as MCS (4, 490).

MCSs corresponding to different transmission occasions belonging to a same set of transmission occasions are the same. In a possible implementation, for a set of transmission occasions, if the access network device configures parameters such as a periodicity of the set of transmission occasions by using an RRC message, and activates the set of transmission occasions by using DCI, when the access network device indicates an MCS corresponding to the set of transmission occasions to the terminal by using the indication information 1 and the indication information 2, the indication information 1 may be carried in the RRC message, for example, the indication information 1 may be carried in a CG-Config field corresponding to the set of transmission occasions in the RRC message, and the indication information 2 may be carried in the DCI.

It can be learned from the foregoing descriptions of related technical features that different transmission occasions in a same set of transmission occasions have a same frequency domain width and a same time domain length (that is, quantities of resource elements (resource elements, REs) included in different transmission occasions in the same set of transmission occasions are the same), and MCSs corresponding to different transmission occasions in the same set of transmission occasions are the same. An amount of data that a transmission occasion can carry may be determined based on a quantity of available REs included in the transmission occasion and an MCS corresponding to the transmission occasion. Therefore, amounts (where the data amount herein may refer to a maximum data amount) of data that different transmission occasions in the same set of transmission occasions can carry are the same. Therefore, it can be learned that amounts of data that transmission occasions corresponding to different data frames can carry are the same.

For example, in FIG. 2B, the data frame k corresponds to the transmission occasion k, and the data frame k+1 corresponds to the transmission occasion k+1. Because the transmission occasion k and the transmission occasion k+1 belong to a same set of transmission occasions, amounts of data that the transmission occasion k and the transmission occasion k+1 can carry are the same.

For another example, in FIG. 2C, the data frame k corresponds to the transmission occasion k and the transmission occasion k+1, and the data frame k+1 corresponds to the transmission occasion k+2 and the transmission occasion k+3. Because the transmission occasion k to the transmission occasion k+3 belong to a same set of transmission occasions, a sum of amounts of data that the transmission occasion k and the transmission occasion k+1 can carry is the same as a sum of amounts of data that the transmission occasion k+2 and the transmission occasion k+3 can carry.

For another example, in FIG. 2E, the data frame k corresponds to the transmission occasion k and the transmission occasion k+1, and the data frame k+1 corresponds to the transmission occasion k+2 and the transmission occasion k+3. Because the transmission occasion k and the transmission occasion k+2 belong to a same set of transmission occasions, amounts of data that the transmission occasion k and the transmission occasion k+2 can carry are the same. Because the transmission occasion k+1 and the transmission occasion k+3 belong to a same set of transmission occasions, amounts of data that the transmission occasion k+1 and the transmission occasion k+3 can carry are the same. Therefore, a sum of amounts of data that the transmission occasion k and the transmission occasion k+1 can carry is the same as a sum of amounts of data that the transmission occasion k+2 and the transmission occasion k+3 can carry.

However, it can be learned from the foregoing descriptions of the data frame that, data amounts of different data frames of a same service may be different, and amounts of data that transmission occasions corresponding to different data frames can carry are the same. Therefore, an amount of data that a transmission occasion corresponding to a data frame can carry does not match a data amount of the data frame. For example, when the amount of data that the transmission occasion corresponding to the data frame can carry is greater than the data amount of the data frame, wastes of transmission resources are caused.

For example, the access network device configures a set of transmission occasions for an XR service in the manner described in Configuration manner 1. For example, the access network device may estimate a maximum data amount of a data frame of the XR service, and configure the transmission occasion based on the maximum data amount of the data frame, that is, an amount of data that a transmission occasion corresponding to the data frame can carry is equal to the maximum data amount of the data frame. In this case, if data amounts of some data frames are small, a problem of resource wastes may exist. For example, as shown in FIG. 2F, a data frame k+1 corresponds to a transmission occasion k+2 and a transmission occasion k+3, but data of the data frame k+1 occupies only the transmission occasion k+2. Consequently, a resource of the transmission occasion k+3 is wasted (for example, no information is transmitted on the transmission occasion k+3). A data frame k+2 corresponds to a transmission occasion k+4 and a transmission occasion k+5, but data of the data frame k+2 occupies only the transmission occasion k+4 and some resources of the transmission occasion k+5. Consequently, other resources of the transmission occasion k+5 are wasted (for example, some padding bits are transmitted on the other resources).

In view of this, in embodiments of this application, a related implementation of transmitting a data frame between the access network device and the terminal in the semi-persistent scheduling manner is studied. Further, in embodiments of this application, a case in which an amount of data that a transmission occasion corresponding to a data frame can carry is greater than a data amount of the data frame is mainly studied.

For example, the communication method provided in embodiments of this application includes: A terminal sends indication information to an access network device on a first transmission occasion, where the indication information indicates an adjustment to a time-frequency resource and/or an MCS of a second transmission occasion. Then, the terminal performs data transmission with the access network device on the second transmission occasion based on an adjusted time-frequency resource and/or MCS of the second transmission occasion. In this way, when an amount of data that a transmission occasion corresponding to a data frame can carry does not match a data amount of the data frame (for example, the amount of data that the transmission occasion corresponding to the data frame can carry is greater than the data amount of the data frame), the terminal may adjust a time-frequency resource and/or an MCS of the transmission occasion, and send indication information to the access network device, so that resource wastes are reduced.

The following uses uplink transmission (that is, the access network device configures a transmission occasion for the terminal by using a CG) as an example to describe the communication method provided in embodiments of this application.

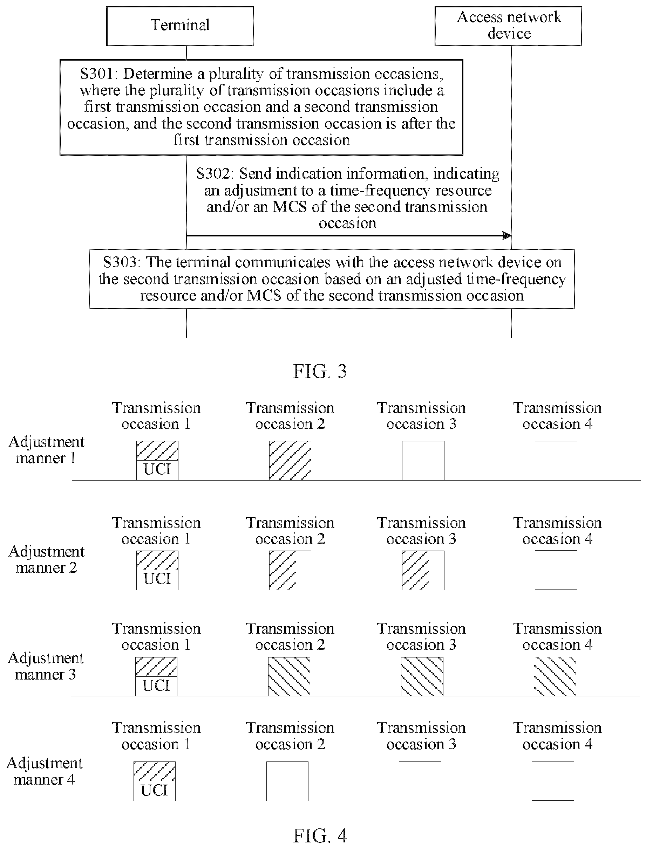

FIG. 3 is a schematic flowchart corresponding to a communication method according to an embodiment of this application. In FIG. 3, an example in which a terminal and an access network device are used as execution entities of an interaction illustration is used for illustrating the method. However, the execution entities of the interaction illustration are not limited in this application. For example, the terminal in FIG. 3 may alternatively be a chip, a chip system, or a processor that supports the terminal in implementing the method. The access network device in FIG. 3 may alternatively be a chip, a chip system, or a processor that supports the access network device in implementing the method, or may be a logical node, a logical module, or software that can implement all or some functions of the access network device.

As shown in FIG. 3, the method includes the following steps.

**S301:** The terminal determines a plurality of transmission occasions, where the plurality of transmission occasions include a first transmission occasion and a second transmission occasion, and the second transmission occasion is after the first transmission occasion.

That the terminal determines the plurality of transmission occasions herein may be: The terminal determines time-frequency resources and/or MCSs of the plurality of transmission occasions. The plurality of transmission occasions may be configured by the access network device for the terminal. For example, the access network device estimates a transmission periodicity of a data frame and a data amount of the data frame based on a user service request, a quality of service flow establishment request, or assistance information reported by the terminal, and then sends first configuration information to the terminal. The first configuration information is used for configuring the plurality of transmission occasions. Correspondingly, the terminal may determine the plurality of transmission occasions based on the first configuration information. For a specific implementation in which the access network device configures the plurality of transmission occasions for the terminal, refer to the foregoing descriptions. In addition, from a perspective of the access network device, because the plurality of transmission occasions are configured by the access network device, the access network device may also determine the time-frequency resources and/or the MCSs of the plurality of transmission occasions.

It may be understood that, because data amounts of different data frames may be different, after estimating the data amount of the data frame, the access network device may configure a transmission occasion corresponding to the data frame based on an estimated maximum data amount of the data frame (in this case, an amount of data that the transmission occasion corresponding to the data frame can carry is equal to the maximum data amount), or may configure a transmission occasion corresponding to the data frame based on an estimated average data amount of the data frame (in this case, an amount of data that the transmission occasion corresponding to the data frame can carry is equal to the average data amount). This is not limited in this embodiment of this application.

The following describes the plurality of transmission occasions.

For example, the plurality of transmission occasions may be within a transmission periodicity of the data frame, or the plurality of transmission occasions are transmission occasions included in the transmission periodicity of the data frame, or the plurality of transmission occasions are transmission occasions corresponding to the data frame.

For example, the plurality of transmission occasions may be a transmission occasion k and a transmission occasion k+1 in FIG. 2C. In this case, the plurality of transmission occasions belong to a same set of transmission occasions, and the plurality of transmission occasions are within a plurality of CG periodicities. For another example, the plurality of transmission occasions may be a transmission occasion k and a transmission occasion k+1 in FIG. 2D. In this case, the plurality of transmission occasions belong to a same set of transmission occasions, and the plurality of transmission occasions are within one CG periodicity. For another example, the plurality of transmission occasions may be a transmission occasion k and a transmission occasion k+1 in FIG. 2E. In this case, the plurality of transmission occasions belong to different sets of transmission occasions.

**S302:** The terminal sends indication information to the access network device on the first transmission occasion, where the indication information indicates an adjustment to a time-frequency resource and/or an MCS of at least one transmission occasion. The at least one transmission occasion includes the second transmission occasion. Correspondingly, the access network device receives the indication information.

There may be a plurality of trigger factors for sending, by the terminal, the indication information to the access network device on the first transmission occasion. For example, after determining that amounts of data that the plurality of transmission occasions can carry are greater than the data amount of the data frame, the terminal sends the indication information to the access network device. For another example, after determining that a difference between the amounts of data that the plurality transmission occasions can carry and the data amount of the data frame is greater than or equal to a data amount threshold, the terminal sends the indication information to the access network device. In other words, when the difference between the amounts of data that the plurality of transmission occasions can carry and the data amount of the data frame is less than the data amount threshold, the terminal may not need to adjust the transmission occasion and also not need to send the indication information. The data amount threshold may be predefined in a protocol, or may be configured by the access network device for the terminal. This is not specifically limited.
**(1)** The first transmission occasion and the at least one transmission occasion are described.

The first transmission occasion may be any transmission occasion other than a last transmission occasion in the plurality of transmission occasions. For example, the first transmission occasion is a 1^{st} transmission occasion in the plurality of transmission occasions. It may be understood that, in this embodiment of this application, position relationships between transmission occasions, for example, a "1^{st} transmission occasion" and a "last transmission occasion", are position relationships in time domain.

The at least one transmission occasion may include some or all transmission occasions after the first transmission occasion in the plurality of transmission occasions. For example, if the plurality of transmission occasions include M transmission occasions, and the first transmission occasion is a 1^{st} transmission occasion in the M transmission occasions, the at least one transmission occasion may include some or all of the remaining M-1 transmission occasions.

In this way, if the first transmission occasion is the 1^{st} transmission occasion in the plurality of transmission occasions, the terminal sends the indication information on the 1^{st} transmission occasion, so that more transmission occasions can be adjusted, and the access network device can learn of usage of a subsequent transmission occasion earlier, to allocate unused resources to another terminal and improve resource utilization.

### (2) The indication information is described.

As described above, the indication information indicates an adjustment to a time-frequency resource and/or an MCS of the at least one transmission occasion. For example, the indication information may include one or more of the following: information indicating the at least one transmission occasion (referred to as information 1 for ease of description), adjustment information for the time-frequency resource of the at least one transmission occasion, and adjustment information for the MCS of the at least one transmission occasion.

### (2.1) The information 1 is described.

The second transmission occasion in the at least one transmission occasion is used as an example, and information indicating the second transmission occasion may include any one of the following:
① a CG index corresponding to the second transmission occasion; or
② a hybrid automatic repeat request (hybrid automatic repeat request, HARQ) process number corresponding to the second transmission occasion; or
③ a position number of the second transmission occasion in the plurality of transmission occasions; or
④ position number interval information, where the position number interval information indicates a position number interval, for example, the position number interval is [M1, M2], and a position number of the second transmission occasion in the plurality of transmission occasions is within the position number interval; the position number interval information may include a lower limit (that is, M1) and/or an upper limit (that is, M2) of the position number interval; and if the position number interval information does not include the upper limit, the upper limit is a position number of the last transmission occasion in the plurality of transmission occasions by default, and if the position number interval information does not include the lower limit, the lower limit is a position number of a next transmission occasion of the first transmission occasion by default; or
⑤ a first bitmap, where each bit in the first bitmap corresponds to one of the plurality of transmission occasions, and a value of a bit corresponding to the second transmission occasion is a preset value, for example, the preset value is "1", in other words, in the first bitmap, a transmission occasion corresponding to a bit with a value of "1" is a transmission occasion on which a time-frequency resource and/or an MCS need/needs to be adjusted, and a transmission occasion corresponding to a bit with a value of "0" is a transmission occasion on which a time-frequency resource and/or an MCS do/does not need to be adjusted; or
⑥ a first CG index and a second bitmap, where for example, the plurality of transmission occasions include M transmission occasions, the first CG index corresponds to N transmission occasions of the M transmission occasions, the N transmission occasions include the second transmission occasion, each bit in the second bitmap corresponds to one of the N transmission occasions, and a value of a bit corresponding to the second transmission occasion is a preset value, for example, the preset value is "1".

For ①, for example, the plurality of transmission occasions include a transmission occasion 1, a transmission occasion 2, a transmission occasion 3, and a transmission occasion 4, and the first transmission occasion is the transmission occasion 1. The transmission occasion 1 and the transmission occasion 2 belong to a same set of transmission occasions, and a corresponding CG index is 1. The transmission occasion 3 and the transmission occasion 4 belong to a same set of transmission occasions, and a corresponding CG index is 2. In this case, for example, if the information 1 includes one CG index, and the CG index is 2, the at least one transmission occasion includes the transmission occasion 3 and the transmission occasion 4. For another example, if the information 1 includes two CG indexes, and the two CG indexes are respectively 1 and 2, the at least one transmission occasion includes the transmission occasion 2, the transmission occasion 3, and the transmission occasion 4.

For another example, the plurality of transmission occasions include a transmission occasion 1, a transmission occasion 2, a transmission occasion 3, and a transmission occasion 4, and the first transmission occasion is the transmission occasion 1. The transmission occasion 1, the transmission occasion 2, the transmission occasion 3, and the transmission occasion 4 belong to a same set of transmission occasions, and correspond to a same CG index. In this case, the indication information may not include the CG index (in other words, the indication information does not include the information 1). In other words, the indication information may implicitly indicate that a transmission occasion on which the time-frequency resource and/or the MCS need/needs to be adjusted is a transmission occasion that has a same CG index as the first transmission occasion in the plurality of transmission occasions, that is, the transmission occasion 2, the transmission occasion 3, and the transmission occasion 4.

For ②, for example, the plurality of transmission occasions include a transmission occasion 1, a transmission occasion 2, a transmission occasion 3, and a transmission occasion 4, and the first transmission occasion is the transmission occasion 1. A HARQ process number corresponding to the transmission occasion 1 is x1, a HARQ process number corresponding to the transmission occasion 2 is x2, a HARQ process number corresponding to the transmission occasion 3 is x3, and a HARQ process number corresponding to the transmission occasion 4 is x4. In this case, for example, if the information 1 includes two HARQ process numbers, and the two HARQ process numbers are respectively x3 and x4, the at least one transmission occasion includes the transmission occasion 3 and the transmission occasion 4.

For ③ and ④, for example, the plurality of transmission occasions include a transmission occasion 1, a transmission occasion 2, a transmission occasion 3, and a transmission occasion 4, and the first transmission occasion is the transmission occasion 1. A position number of the transmission occasion 1 in the plurality of transmission occasions is 1, a position number of the transmission occasion 2 in the plurality of transmission occasions is 2, and so on. In this case, for example, if the information 1 includes two position numbers, and the two position numbers are respectively 3 and 4, the at least one transmission occasion includes the transmission occasion 3 and the transmission occasion 4. For another example, if the information 1 includes values of M1 and M2, M1=2, and M2=4, the at least one transmission occasion includes the transmission occasion 2, the transmission occasion 3, and the transmission occasion 4. For another example, if the information 1 includes a value of M1 (does not include a value of M2), and M1=2, the at least one transmission occasion includes the transmission occasion 2, the transmission occasion 3, and the transmission occasion 4.

For ⑤, for example, the plurality of transmission occasions include a transmission occasion 1, a transmission occasion 2, a transmission occasion 3, and a transmission occasion 4, and the first transmission occasion is the transmission occasion 1. In this case, for example, the information 1 includes the first bitmap, and the first bitmap includes four bits. A 1^{st} bit in the four bits corresponds to the transmission occasion 1, a 2^{nd} bit corresponds to the transmission occasion 2, and so on. If the first bitmap is "0011", that is, values of the 1^{st} bit and the 2ⁿd bit are "0", and values of a 3^{rd} bit and a 4^{th} bit are "1", the at least one transmission occasion includes the transmission occasion 3 and the transmission occasion 4.

For ⑥, the plurality of transmission occasions include a transmission occasion 1, a transmission occasion 2, a transmission occasion 3, and a transmission occasion 4, and the first transmission occasion is the transmission occasion 1. The transmission occasion 1 and the transmission occasion 2 belong to a same set of transmission occasions, and a corresponding CG index is 1. The transmission occasion 3 and the transmission occasion 4 belong to a same set of transmission occasions, and a corresponding CG index is 2. In this case, for example, the information 1 includes a first CG index and a second bitmap corresponding to the first CG index. The first CG index is 2. The second bitmap includes two bits. A 1^{st} bit in the two bits corresponds to the transmission occasion 3, and a 2^{nd} bit corresponds to the transmission occasion 4. If the second bitmap is "01", the at least one transmission occasion includes the transmission occasion 4. For another example, the information 1 includes a first CG index and a second bitmap corresponding to the first CG index, and further includes a second CG index and a third bitmap corresponding to the second CG index. The first CG index is 2, the second bitmap is "01", the second CG index is 1, and the third bitmap is "11". In this case, the at least one transmission occasion includes the transmission occasion 2, the transmission occasion 3, and the transmission occasion 4.

**(2.2)** The adjustment information for the time-frequency resource of the at least one transmission occasion is described.

The second transmission occasion in the at least one transmission occasion is used as an example. Adjustment information for a time-frequency resource of the second transmission occasion may include an index of a first adjustment rule, and the first adjustment rule is used for adjusting a time domain resource and/or a frequency domain resource of the second transmission occasion.

For example, the terminal may obtain a plurality of adjustment rules, and the first adjustment rule may be an adjustment rule selected by the terminal from the plurality of adjustment rules. The plurality of adjustment rules may be predefined in a protocol, or the plurality of adjustment rules may be configured by the access network device for the terminal. This is not specifically limited. An example in which "the plurality of adjustment rules are configured by the access network device for the terminal" is used. The access network device may send second configuration information to the terminal, where the second configuration information includes the plurality of adjustment rules and indexes of the plurality of adjustment rules. When adjusting the time domain resource and/or the frequency domain resource of the second transmission occasion by using the first adjustment rule, the terminal may send the index of the first adjustment rule to the access network device. A specific adjustment rule used by the terminal depends on internal implementation of the terminal. This is not limited in this embodiment of this application.

In addition, when the at least one transmission occasion includes two or more transmission occasions, the terminal may adjust a time domain resource and/or a frequency domain resource of the at least one transmission occasion by using a same adjustment rule, or may adjust a time domain resource and/or a frequency domain resource of the at least one transmission occasion by using different adjustment rules. For example, the at least one transmission occasion includes the second transmission occasion and a third transmission occasion, and the terminal may adjust the time domain resource and/or the frequency domain resource of the second transmission occasion by using the first adjustment rule, and adjust a time domain resource and/or a frequency domain resource of the third transmission occasion by using a second adjustment rule.

For example, the adjustment rule in this embodiment of this application may include three types of adjustment rules: a first-type adjustment rule, a second-type adjustment rule, and a third-type adjustment rule.

**The first-type adjustment rule** is to shorten a time domain length of a transmission occasion, for example, shorten by one or more symbols. The shortening herein may mean that a time domain start position of a transmission occasion remains unchanged, and a time domain end position is shifted forward. The first-type adjustment rule may include an adjusted time domain length, or an adjustment amount of the time domain length (that is, one or more symbols).

**The second-type adjustment rule** is to shorten a frequency domain width of a transmission occasion, for example, shorten by one or more RBs. The shortening herein may mean that a frequency domain start position of a transmission occasion remains unchanged, and a frequency domain end position is shifted forward. The second-type adjustment rule may include an adjusted frequency domain width, or an adjustment amount of the frequency domain width (that is, one or more RBs).

**The third-type adjustment rule** is to shorten a time domain length and a frequency domain width of a transmission occasion. For example, the time domain length is shortened by one or more symbols, and the frequency domain width is shortened by one or more RBs. For details, refer to the first-type adjustment rule and the second-type adjustment rule.

According to the descriptions of the foregoing three types of adjustment rules, in an example, the plurality of adjustment rules obtained by the terminal may include one or more of the following: at least one first-type adjustment rule, at least one second-type adjustment rule, and at least one third-type adjustment rule. The at least one first-type adjustment rule includes, for example, an adjustment rule a1 (shortening by a1 symbols) and an adjustment rule a2 (shortening by a2 symbols). The at least one second-type adjustment rule includes, for example, an adjustment rule b1 (shortening by b1 RBs) and an adjustment rule b2 (shortening by b2 symbols). The at least one third-type adjustment rule includes, for example, an adjustment rule c1 (shortening by x1 symbols, and shortening by y1 RBs) and an adjustment rule c2 (shortening by x2 symbols, and shortening by y2 RBs).

In this way, using the second transmission occasion as an example, the second transmission occasion is adjusted by using any one of the foregoing adjustment rules, to reduce padding bits, so that power spectral density of the terminal is improved, and power consumption of the terminal is reduced.

**(2.3)** The adjustment information for the MCS of the at least one transmission occasion is described.

Adjustment information for an MCS of the second transmission occasion may include an index (denoted as an MCS index) of an adjusted MCS of the second transmission occasion, or an offset (denoted as a delta MCS index) between an index of the adjusted MCS of the second transmission occasion and an index of the MCS before the adjustment of the second transmission occasion. The offset indicates a variation of the index of the adjusted MCS of the second transmission occasion relative to the index of the MCS before the adjustment of the second transmission occasion. For example, the offset may be equal to a difference between the index of the adjusted MCS of the second transmission occasion and the index of the MCS before the adjustment of the second transmission occasion, or the offset may be equal to the difference minus 1. For another example, the offset may be equal to a difference between the index of the MCS before the adjustment of the second transmission occasion and the index of the adjusted MCS of the second transmission occasion, or the offset may be equal to the difference plus 1. For another example, the offset may be equal to an absolute value of the foregoing any difference.

For example, the offset is less than or equal to an offset threshold. The offset threshold may be predefined in a protocol, or may be configured by the access network device for the terminal. This is not specifically limited. For example, the offset threshold may be set to -5 or -2, or may be set to 5 or 2.

For example, the index of the adjusted MCS of the second transmission occasion may be less than the index of the MCS before the adjustment of the second transmission occasion. In other words, an adjustment order and/or a target bit rate corresponding to the transmission occasion may be reduced, to improve coverage or improve transmission reliability.

In the foregoing manner, the plurality of adjustment rules are predefined or preconfigured, and/or the offset threshold is predefined or preconfigured, so that the terminal can adjust the transmission occasion more properly, thereby ensuring that an adjustment to the transmission occasion by the terminal is within a controllable range.

(3) An implementation in which the terminal sends the indication information to the access network device is described.

The terminal may send the indication information to the access network device in a plurality of manners. For example, the terminal may send uplink control information (uplink control information, UCI), CG-UCI, or a media access control (media access control, MAC) control element (control element, CE) to the access network device, where the UCI, the CG-UCI, or the MAC CE includes the indication information. For example, the UCI is used as an example. One or more fields may be added to the UCI, and the one or more fields are used for carrying the indication information.

In addition, optionally, after receiving the indication information, the access network device may feed back acknowledgment information to the terminal. The acknowledgment information indicates that the access network device has received the indication information.

**S303:** The terminal communicates with the access network device on the at least one transmission occasion based on an adjusted time-frequency resource and/or MCS of the at least one transmission occasion.

The second transmission occasion in the at least one transmission occasion is used herein as an example. The terminal may send data of a data frame on the second transmission occasion based on the adjusted time-frequency resource and/or MCS of the second transmission occasion. Correspondingly, the access network device may receive the data of the data frame on the second transmission occasion based on the adjusted time-frequency resource and/or MCS of the second transmission occasion.

It may be understood that adjusting the time-frequency resource of the second transmission occasion may include: adjusting a time domain length of the second transmission occasion to 0, and/or adjusting a frequency domain width of the second transmission occasion to 0. In this case, the terminal and the access network device may transmit the data of the data frame not on the second transmission occasion. Optionally, the access network device may allocate the second transmission occasion to another terminal for use, to reduce resource wastes and improve resource utilization.

The following describes several examples of adjustment manners with reference to FIG. 4. The following examples are based on this assumption: A plurality of transmission occasions include a transmission occasion 1, a transmission occasion 2, a transmission occasion 3, and a transmission occasion 4. In Adjustment manner 1 to Adjustment manner 3, CG indexes corresponding to the transmission occasion 1 and the transmission occasion 2 are a CG index 1, and CG indexes corresponding to the transmission occasion 3 and the transmission occasion 4 are a CG index 2. In Adjustment manner 4, the transmission occasion 1, the transmission occasion 2, the transmission occasion 3, and the transmission occasion 4 correspond to a same CG index. In addition, in various examples shown in FIG. 4, the first transmission occasion is the transmission occasion 1, that is, the terminal sends the indication information on the transmission occasion 1 (in FIG. 4, an example in which the indication information is sent by using UCI is used). The indication information may occupy some resources of the transmission occasion 1, and a resource other than the some resources of the transmission occasion 1 may be used to transmit data of a data frame.

**Adjustment manner 1:** The transmission occasion 3 and the transmission occasion 4 are adjusted by using an adjustment rule 1. For example, the adjustment rule 1 is the third-type adjustment rule, and the adjustment rule 1 means that an adjustment amount of a time domain length is equal to a time domain length of the transmission occasion 3 or the transmission occasion 4, and an adjustment amount of a frequency domain width is equal to a frequency domain width of the transmission occasion 3 or the transmission occasion 4. In this case, the terminal does not use the transmission occasion 3 and the transmission occasion 4 to transmit the data of the data frame, that is, transmits the data of the data frame only on the transmission occasion 1 and the transmission occasion 2.

For Adjustment manner 1, in an example, as shown in Table 1, the UCI may include two fields: a field 1 and a field 2. The field 1 is used for carrying the CG index 2, and the field 2 is used for carrying an index of the adjustment rule 1.

**Table 1: Example of a UCI format**

| Field (field) | Bitwidth (bitwidth) |
|---|---|
| CG index 2 | k1 bits |
| Index of an adjustment rule 1 | k2 bits |

Both k1 and k2 are integers. Values of k1 and k2 are not limited in this embodiment of this application.

It may be understood that, if the access network device configures the adjustment rule 1 only for the terminal, the UCI may include the CG index 2, but does not include the index of the adjustment rule 1. In this case, the UCI implicitly indicates that a corresponding transmission occasion is adjusted by using the adjustment rule 1.

**Adjustment manner 2:** The transmission occasion 2 and the transmission occasion 3 are adjusted by using an adjustment rule 2, and the transmission occasion 4 is adjusted by using an adjustment rule 1. The adjustment rule 2 is the first-type adjustment rule, and the adjustment rule 2 means that a time domain length is shortened by one or more symbols. For details about the adjustment rule 1, refer to the descriptions in Adjustment manner 1. In this case, the terminal does not use the transmission occasion 4 to transmit the data of the data frame, that is, transmits the data of the data frame only on the transmission occasion 1, the transmission occasion 2, and the transmission occasion 3.

For Adjustment manner 2, in an example, as shown in Table 2, the UCI may include five fields: a field 1 to a field 5. The field 1 is used for carrying the CG index 1, the field 2 is used for carrying an index of the adjustment rule 2, the field 3 is used for carrying the CG index 2, the field 4 is used for carrying the index of the adjustment rule 2, and the field 5 is used for carrying an index of the adjustment rule 1. The field 1 and the field 2 indicate that the transmission occasion 2 is adjusted by using the adjustment rule 2. The field 3, the field 4, and the field 5 indicate that a 1^{st} transmission occasion (that is, the transmission occasion 2) corresponding to the CG index 2 is adjusted by using the adjustment rule 2, and a 2^{nd} transmission occasion (that is, the transmission occasion 4) corresponding to the CG index 2 is adjusted by using the adjustment rule 1.

**Table 2: Example of a UCI format**

| Field (field) | Bitwidth (bitwidth) |
|---|---|
| CG index 1 | k1 bits |
| Index of an adjustment rule 2 | k2 bits |
| CG index 2 | k1 bits |
| Index of the adjustment rule 2 | k2 bits |
| Index of an adjustment rule 1 | k2 bits |

**Adjustment manner 3:** MCSs of the transmission occasion 2, the transmission occasion 3, and the transmission occasion 4 are adjusted. In this case, the terminal transmits the data of the data frame on the transmission occasion 1, the transmission occasion 2, the transmission occasion 3, and the transmission occasion 4. An MCS corresponding to the transmission occasion 1 remains unchanged.

For Adjustment manner 3, in an example, as shown in Table 3, the UCI may include two fields: a field 1, a field 2, and a field 3. The field 1 is used for carrying the CG index 1, the field 2 is used for carrying the CG index 2, and the field 3 is used for carrying an MCS index or a delta MCS index.

**Table 3: Example of a UCI format**

| Field (field) | Bitwidth (bitwidth) |
|---|---|
| CG index 1 | k1 bits |
| CG index 2 | k1 bits |
| MCS index or delta MCS index | K3 bits |

k3 is an integer. A value of k3 is not limited in this embodiment of this application.

It may be understood that if the access network device configures one MCS index or delta MCS index only for the terminal, the UCI may include the CG index 1 and the CG index 2, but does not include the MCS index or the delta MCS index. In this case, the UCI implicitly indicates that the index of the adjusted MCS is a preconfigured MCS index, or an offset between the index of the adjusted MCS and an index of an MCS before adjustment is a preconfigured delta MCS index.

**Adjustment manner 4:** The transmission occasion 2, the transmission occasion 3, and the transmission occasion 4 are adjusted by using an adjustment rule 1. In this case, the terminal does not use the transmission occasion 2, the transmission occasion 3, and the transmission occasion 4 to transmit the data of the data frame, that is, transmits the data of the data frame only on the transmission occasion 1.

For Adjustment manner 4, in an example, as shown in Table 4, the UCI may include three fields: a field 1, a field 2, and a field 3. The field 1 is used for carrying M1, the field 2 is used for carrying M2, and the field 3 is used for carrying an index of the adjustment rule 1.

**Table 4: Example of a UCI format**

| Field (field) | Bitwidth (bitwidth) |
|---|---|
| M1 | k4 bits |
| M2 | k5 bits |
| Index of an adjustment rule 1 | k2 bits |

A value of M1 may be 2, and a value of M2 may be 4, that is, it indicates that transmission occasions to which the adjustment rule 1 is applicable are from a transmission occasion whose position number is 2 to a transmission occasion whose position number is 4 (that is, the transmission occasion 2, the transmission occasion 3, and the transmission occasion 4). Both k4 and k5 are integers. Values of k4 and k5 are not limited in this embodiment of this application.

It may be understood that, if the access network device configures the adjustment rule 1 only for the terminal, the UCI may include M1 and M2, but does not include the index of the adjustment rule 1. In this case, the UCI implicitly indicates that a corresponding transmission occasion is adjusted by using the adjustment rule 1.

In another example, as shown in Table 5, the UCI may include two fields: a field 1 and a field 2. The field 1 is used for carrying M1, and the field 2 is used for carrying an index of the adjustment rule 1.

**Table 5: Example of a UCI format**

| Field (field) | Bitwidth (bitwidth) |
|---|---|
| M1 | k4 bits |
| Index of an adjustment rule 1 | k2 bits |

In this case, the UCI does not include M2, and the value of M2 may be a quantity (that is, 4), by default, of transmission occasions included in a transmission periodicity of the data frame.

In still another example, as shown in Table 6, the UCI may include two fields: a field 1 and a field 2. The field 1 is used for carrying M2, and the field 2 is used for carrying an index of the adjustment rule 1.

**Table 6: Example of a UCI format**

| Field (field) | Bitwidth (bitwidth) |
|---|---|
| M2 | k5 bits |
| Index of an adjustment rule 1 | k2 bits |

In this case, the UCI does not include M1, and the value of M1 may be a position number (that is, 2) of a next transmission occasion of the first transmission occasion by default.

In still another example, as shown in Table 7, the UCI may include one field. The field is used for carrying an index of the adjustment rule 1.

**Table 7: Example of a UCI format**

| Field (field) | Bitwidth (bitwidth) |
|---|---|
| Index of an adjustment rule 1 | k2 bits |

In this case, the UCI does not include the information 1, and the UCI implicitly indicates that transmission occasions to which the adjustment rule 1 is applicable are transmission occasions that are in the plurality of transmission occasions and that have a same CG index as the transmission occasion 1, that is, the transmission occasion 2, the transmission occasion 3, and the transmission occasion 4.

Generally, after configuring a transmission occasion for the terminal, the access network device may change a parameter (for example, a time-frequency resource and/or an MCS of the transmission occasion) of the transmission occasion only in a reactivation manner, and needs to change parameters of all subsequent transmission occasions. However, according to the method in this embodiment of this application, parameters of some transmission occasions may be temporarily adjusted (or in other words, a parameter of a transmission occasion is dynamically adjusted), and there is high flexibility. For example, in a scenario in which an amount of data that a transmission occasion corresponding to a data frame can carry is greater than a data amount of the data frame, parameters of some transmission occasions are temporarily adjusted, and this adjustment is notified to the access network device by using indication information, so that resource wastes can be effectively reduced, and power consumption of the terminal is reduced.

It may be understood that the foregoing is described by using an example in which "the at least one transmission occasion includes some or all transmission occasions after the first transmission occasion in the plurality of transmission occasions, that is, the at least one transmission occasion does not include the first transmission occasion". In another possible embodiment, the at least one transmission occasion may include the first transmission occasion, that is, a time-frequency resource and/or an MCS of the first transmission occasion may be adjusted. For example, when the terminal sends the indication information by using the UCI or the CG-UCI, because an encoding manner of the UCI or the CG-UCI is different from an encoding manner of data, for example, a modulation manner is quadrature phase-shift keying (quadrature phase-shift keying, QPSK) when the UCI or the CG-UCI is multiplexed on the PUSCH for transmission, the access network device may decode the UCI or the CG-UCI based on the QPSK, and then decode the data based on the indication information in the UCI or the CG-UCI after the UCI or the CG-UCI is decoded. Therefore, when the at least one transmission occasion includes the first transmission occasion, the access network device may also obtain, through decoding based on an adjusted time-frequency resource and/or MCS, data transmitted on the first transmission occasion.

The foregoing mainly describes the solutions provided in embodiments of this application from a perspective of interaction between communication apparatuses. It may be understood that, to implement the foregoing functions, the access network device and the terminal may include corresponding hardware structures and/or software modules for implementing the functions. A person skilled in the art should be easily aware that, in combination with units and algorithm steps of the examples described in embodiments disclosed in this specification, embodiments of this application can be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, division into functional units may be performed on the access network device and the terminal based on the foregoing method examples. For example, each functional unit may be obtained through division based on each corresponding function, or two or more functions may be integrated into one unit. The integrated unit may be implemented in a form of hardware, or may be implemented in a form of a software functional unit.

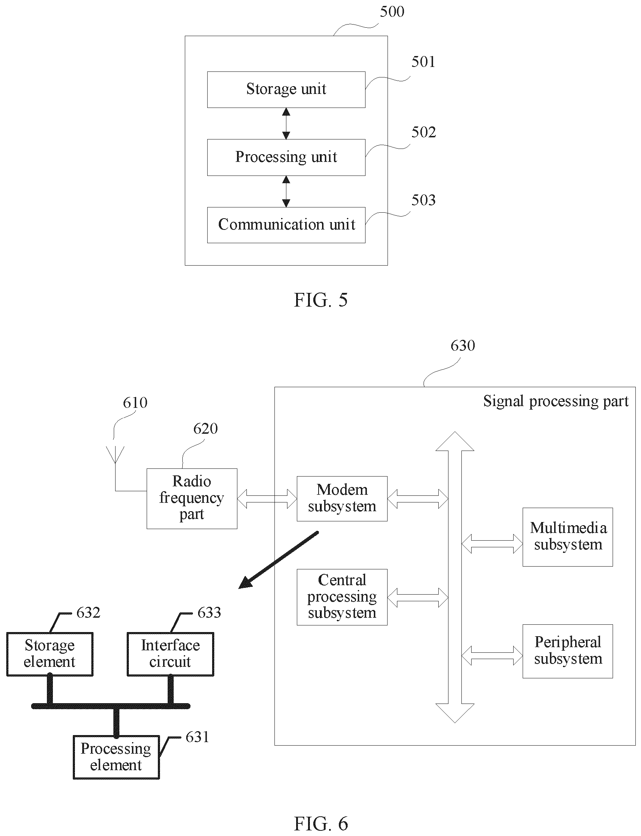

FIG. 5 is a block diagram of a possible example of an apparatus according to an embodiment of this application. As shown in FIG. 5, the apparatus 500 may include a processing unit 502 and a communication unit 503. The processing unit 502 is configured to control and manage actions of the apparatus 500. The communication unit 503 is configured to support communication between the apparatus 500 and another device. Optionally, the communication unit 503 is also referred to as a transceiver unit, and may include a receiving unit and/or a sending unit, which are respectively configured to perform a receiving operation and a sending operation. The apparatus 500 may further include a storage unit 501, configured to store program code and/or data of the apparatus 500.

The apparatus 500 may be the terminal in the foregoing embodiments, or may be a component (for example, a circuit or a chip) disposed in the terminal. The processing unit 502 may support the apparatus 500 in performing actions of the terminal in the foregoing method examples. Alternatively, the processing unit 502 mainly performs internal actions of the terminal in the method examples, and the communication unit 503 may support communication between the apparatus 500 and another device.

For example, in an embodiment, the processing unit 502 is configured to determine a plurality of transmission occasions, where the plurality of transmission occasions include a first transmission occasion and a second transmission occasion, and the second transmission occasion is after the first transmission occasion. The communication unit 503 is configured to: send indication information to an access network device on the first transmission occasion, where the indication information indicates an adjustment to a time-frequency resource and/or a modulation and coding scheme MCS of the second transmission occasion, and communicate with the access network device on the second transmission occasion based on an adjusted time-frequency resource and/or MCS of the second transmission occasion.

In a possible design, the plurality of transmission occasions are within one configured grant CG periodicity, or the plurality of transmission occasions are within a transmission periodicity of a data frame.

In a possible design, the first transmission occasion is a 1^{st} transmission occasion in the plurality of transmission occasions.

In a possible design, the indication information includes one or more of the following: information indicating the second transmission occasion; and adjustment information for the time-frequency resource and/or the MCS of the second transmission occasion.

In a possible design, the information indicating the second transmission occasion includes: a CG index corresponding to the second transmission occasion; or a hybrid automatic repeat request HARQ process number corresponding to the second transmission occasion; or a position number of the second transmission occasion in the plurality of transmission occasions; or a bitmap, where each bit in the bitmap corresponds to one of the plurality of transmission occasions, and a value of a bit corresponding to the second transmission occasion is a preset value.

In a possible design, the adjustment information for the time-frequency resource of the second transmission occasion includes an index of a first adjustment rule, and the first adjustment rule is used for adjusting a time domain resource and/or a frequency domain resource of the second transmission occasion.

In a possible design, the processing unit 502 is further configured to obtain a plurality of adjustment rules, where the plurality of adjustment rules include the first adjustment rule.

In a possible design, the adjustment information for the MCS of the second transmission occasion includes an index of the adjusted MCS of the second transmission occasion, or an offset between an index of the adjusted MCS of the second transmission occasion and an index of the MCS before the adjustment of the second transmission occasion.

In a possible design, the offset is less than or equal to an offset threshold.

In a possible design, the indication information further indicates an adjustment to a time-frequency resource and/or an MCS of the first transmission occasion. The communication unit 503 is further configured to communicate with the access network device on the first transmission occasion based on an adjusted time-frequency resource and/or MCS of the first transmission occasion.

The apparatus 500 may be the access network device in the foregoing embodiments, or may be a component (for example, a circuit or a chip) disposed in the access network device. The processing unit 502 may support the apparatus 500 in performing actions of the access network device in the foregoing method examples. Alternatively, the processing unit 502 mainly performs internal actions of the access network device in the method examples, and the communication unit 503 may support communication between the apparatus 500 and another device.

In an embodiment, the processing unit 502 is configured to determine a plurality of transmission occasions, where the plurality of transmission occasions include a first transmission occasion and a second transmission occasion, and the second transmission occasion is after the first transmission occasion. The communication unit 503 is configured to: receive indication information from a terminal on the first transmission occasion, where the indication information indicates an adjustment to a time-frequency resource and/or a modulation and coding scheme MCS of the second transmission occasion, and communicate with the terminal on the second transmission occasion based on an adjusted time-frequency resource and/or MCS of the second transmission occasion.

In a possible design, the plurality of transmission occasions are within one configured grant CG periodicity, or the plurality of transmission occasions are within a transmission periodicity of a data frame.

In a possible design, the first transmission occasion is a 1^{st} transmission occasion in the plurality of transmission occasions.

In a possible design, the indication information includes one or more of the following: information indicating the second transmission occasion; and adjustment information for the time-frequency resource and/or the MCS of the second transmission occasion.

In a possible design, the information indicating the second transmission occasion includes: a CG index corresponding to the second transmission occasion; or a hybrid automatic repeat request HARQ process number corresponding to the second transmission occasion; or a position number of the second transmission occasion in the plurality of transmission occasions; or a bitmap, where each bit in the bitmap corresponds to one of the plurality of transmission occasions, and a value of a bit corresponding to the second transmission occasion is a preset value.

In a possible design, the adjustment information for the time-frequency resource of the second transmission occasion includes an index of a first adjustment rule, and the first adjustment rule is used for adjusting a time domain resource and/or a frequency domain resource of the second transmission occasion.

In a possible design, the first adjustment rule is one of a plurality of adjustment rules.

In a possible design, the adjustment information for the MCS of the second transmission occasion includes an index of the adjusted MCS of the second transmission occasion, or an offset between an index of the adjusted MCS of the second transmission occasion and an index of the MCS before the adjustment of the second transmission occasion.

In a possible design, the offset is less than or equal to an offset threshold.

In a possible design, the indication information further indicates an adjustment to a time-frequency resource and/or an MCS of the first transmission occasion. The communication unit 503 is configured to communicate with the terminal on the first transmission occasion based on an adjusted time-frequency resource and/or MCS of the first transmission occasion.

It should be understood that division of the units in the foregoing apparatus is merely logical function division. During actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated together, or may be implemented independently. The processing element herein may also be referred to as a processor, and may be an integrated circuit having a signal processing capability. In an implementation process, operations in the foregoing methods or the foregoing units may be implemented by using a hardware integrated logic circuit in the processor element or may be implemented in a form in which the processing element invokes software.

In an example, a unit in any one of the foregoing apparatuses may be one or more integrated circuits configured to implement the foregoing methods, for example, one or more application-specific integrated circuits (application-specific integrated circuits, ASICs), one or more microprocessors (digital signal processors, DSPs), one or more field programmable gate arrays (field programmable gate arrays, FPGAs), or a combination of at least two of these forms of integrated circuits. For another example, when the units in the apparatus may be implemented in a form in which the processing element schedules a program, the processing element may be a processor, for example, a general-purpose central processing unit (central processing unit, CPU) or another processor that can invoke the program. For still another example, the units may be integrated and implemented in a form of a system-on-a-chip (system-on-a-chip, SoC).

The foregoing unit for receiving is an interface circuit of the apparatus, and is configured to receive a signal from another apparatus. For example, when the apparatus is implemented in a manner of a chip, the receiving unit is an interface circuit that is of the chip and that is configured to receive a signal from another chip or apparatus. The foregoing unit for sending is an interface circuit of the apparatus, and is configured to send a signal to another apparatus. For example, when the apparatus is implemented in the manner of the chip, the sending unit is an interface circuit that is of the chip and that is configured to send a signal to another chip or apparatus.

FIG. 6 is a diagram of a structure of a terminal according to an embodiment of this application, to implement operations of the terminal in the foregoing embodiments. As shown in FIG. 6, the terminal includes an antenna 610, a radio frequency part 620, and a signal processing part 630. The antenna 610 is connected to the radio frequency part 620. In a downlink direction, the radio frequency part 620 receives, through the antenna 610, information sent by a network device, and sends, to the signal processing part 630 for processing, the information sent by the network device. In an uplink direction, the signal processing part 630 processes information from the terminal, and sends the information to the radio frequency part 620. The radio frequency part 620 processes the information from the terminal, and then sends processed information to the network device through the antenna 610.

The signal processing part 630 may include a modem subsystem, configured to process data at each communication protocol layer, and may further include a central processing subsystem, configured to implement processing at an operating system layer and an application layer of the terminal. In addition, the signal processing part 630 may further include another subsystem, for example, a multimedia subsystem or a peripheral subsystem. The multimedia subsystem is configured to control a camera, a screen display, or the like of the terminal. The peripheral subsystem is configured to implement a connection to another device. The modem subsystem may be a separately disposed chip.

The modem subsystem may include one or more processing elements 631, for example, include one main control CPU and another integrated circuit. In addition, the modem subsystem may further include a storage element 632 and an interface circuit 633. The storage element 632 is configured to store data and a program. However, the program used to perform the method performed by the terminal in the foregoing methods may not be stored in the storage element 632, but is stored in a memory outside the modem subsystem, and is loaded and used by the modem subsystem when to be used. The interface circuit 633 is configured to communicate with another subsystem.

The modem subsystem may be implemented by using a chip. The chip includes at least one processing element and an interface circuit. The processing element is configured to perform the steps of any method performed by the terminal. The interface circuit is configured to communicate with another apparatus. In an implementation, units in the terminal for implementing the steps in the foregoing methods may be implemented in a form in which a processing element schedules a program. For example, the apparatus used in the terminal includes a processing element and a storage element. The processing element invokes a program stored in the storage element, to perform the method performed by the terminal in the foregoing method embodiments. The storage element may be a storage element located on a same chip as the processing element, that is, an on-chip storage element.

In another implementation, a program used to perform the method performed by the terminal in the foregoing methods may be in a storage element located on a different chip from the processing element, namely, an off-chip storage element. In this case, the processing element invokes or loads the program from the off-chip storage element to the on-chip storage element, to invoke and perform the method performed by the terminal in the foregoing method embodiments.

In still another implementation, units in the terminal for implementing the steps in the foregoing methods may be configured as one or more processing elements. These processing elements are disposed on the modem subsystem. The processing element herein may be an integrated circuit, for example, one or more ASICs, one or more DSPs, one or more FPGAs, or a combination of these types of integrated circuits. These integrated circuits may be integrated together to form a chip.

The units in the terminal for implementing the steps in the foregoing methods may be integrated together and implemented in a form of a SOC, and the SOC chip is configured to implement the foregoing methods. At least one processing element and a storage element may be integrated into the chip, and the processing element invokes a program stored in the storage element to implement the foregoing method performed by the terminal. Alternatively, at least one integrated circuit may be integrated into the chip, to implement the foregoing method performed by the terminal. Alternatively, with reference to the foregoing implementations, functions of some units may be implemented in a form in which the processing element invokes a program, and functions of some units may be implemented by the integrated circuit.

It can be learned that the foregoing apparatus used in the terminal may include at least one processing element and an interface circuit. The at least one processing element is configured to perform any method performed by the terminal in the foregoing method embodiments. The processing element may perform some or all steps performed by the terminal in a first manner, that is, by invoking a program stored in the storage element; or may perform some or all steps performed by the terminal in a second manner, that is, by combining instructions and a hardware integrated logic circuit in the processing element. Certainly, some or all steps performed by the terminal may alternatively be performed by combining the first manner and the second manner.

The processing element herein is the same as that described above, and may be implemented by a processor. A function of the processing element may be the same as a function of the processing unit described in FIG. 5. For example, the processing element may be a general-purpose processor, for example, a CPU, or may be one or more integrated circuits configured to implement the foregoing method, for example, one or more ASICs, one or more microprocessors DSPs, one or more FPGAs, or a combination of at least two of the integrated circuit forms. The storage element may be implemented by a memory, and a function of the storage element may be the same as a function of the storage unit described in FIG. 5. The storage element may be a memory, or may be a collective name of a plurality of memories.

The terminal shown in FIG. 6 can implement processes related to the terminal in the foregoing method embodiments. Operations and/or functions of modules in the terminal shown in FIG. 6 are respectively intended to implement corresponding procedures in the foregoing method embodiments. For details, refer to the descriptions in the foregoing method embodiments. To avoid repetition, detailed descriptions are properly omitted herein.

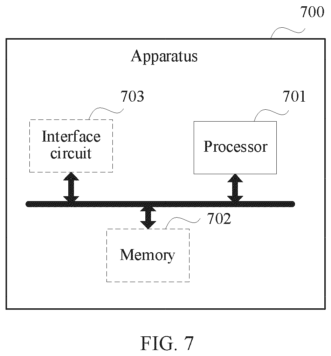

FIG. 7 is a diagram of a structure of an apparatus according to an embodiment of this application. The apparatus 700 may be the access network device in the foregoing embodiment, and is configured to implement a function of the access network device in the foregoing embodiment.

As shown in FIG. 7, the apparatus 700 may include a processor 701, a memory 702, and an interface circuit 703. The processor 701 may be configured to: process a communication protocol and communication data, and control the apparatus 700. The memory 702 may be configured to store a program and data. The processor 701 may perform, based on the program, the method performed by the apparatus 700 in embodiments of this application. The interface circuit 703 may be used by the apparatus 700 to communicate with another device, and the communication may be wired communication or wireless communication.

Alternatively, the memory 702 may be externally connected to the apparatus 700. In this case, the apparatus 700 may include the interface circuit 703 and the processor 701. Alternatively, the interface circuit 703 may be externally connected to the apparatus 700. In this case, the apparatus 700 may include the memory 702 and the processor 701. When both the interface circuit 703 and the memory 702 are externally connected to the apparatus 700, the apparatus 700 may include the processor 701.

The apparatus 700 shown in FIG. 7 can implement processes related to the access network device in the foregoing method embodiments. Operations and/or functions of modules in the apparatus 700 shown in FIG. 7 are respectively intended to implement corresponding procedures in the foregoing method embodiments. For details, refer to the descriptions in the foregoing method embodiments. To avoid repetition, detailed descriptions are properly omitted herein.

An embodiment of this application further provides a communication system. The communication system may include a terminal and an access network device. The terminal is configured to perform the steps on the terminal side in the foregoing method embodiments, and the access network device is configured to perform the steps on the access network device side in the foregoing method embodiments.

The terms "system" and "network" may be used interchangeably in embodiments of this application. "At least one" means one or more, and "a plurality of" means two or more. The term "and/or" describes an association relationship of associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, "at least one of A, B, or C" includes A, B, C, AB, AC, BC, or ABC, and "at least one of A, B, and C" may also be understood as including A, B, C, AB, AC, BC, or ABC. In addition, unless otherwise specified, ordinal numbers such as "first" and "second" in embodiments of this application are used to distinguish between a plurality of objects, and are not used to limit a sequence, a time sequence, a priority, or importance of the plurality of objects.

A person skilled in the art should understand that embodiments of this application may be provided as a method, a system, or a computer program product. Therefore, this application may use a form of hardware-only embodiments, software-only embodiments, or embodiments with a combination of software and hardware. Moreover, this application may use a form of a computer program product that is implemented on one or more computer-usable storage media (including but not limited to a magnetic disk memory, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

It is clear that a person skilled in the art can make various modifications and variations to this application without departing from the spirit and scope of this application. In this way, provided that these modifications and variations made to this application fall within the scope of the claims of this application and equivalent techniques thereof, this application is also intended to cover such modifications and variations.

## Claims

1. A communication method, wherein the method comprises:
determining a plurality of transmission occasions, wherein the plurality of transmission occasions comprise a first transmission occasion and a second transmission occasion, and the second transmission occasion is after the first transmission occasion;
sending indication information to an access network device on the first transmission occasion, wherein the indication information indicates an adjustment to a time-frequency resource and/or a modulation and coding scheme MCS of the second transmission occasion; and
communicating with the access network device on the second transmission occasion based on an adjusted time-frequency resource and/or MCS of the second transmission occasion.

2. The method according to claim 1, wherein the plurality of transmission occasions are within one configured grant CG periodicity, or the plurality of transmission occasions are within a transmission periodicity of a data frame.

3. The method according to claim 2, wherein the first transmission occasion is a 1^{st} transmission occasion in the plurality of transmission occasions.

4. The method according to any one of claims 1 to 3, wherein the indication information comprises one or more of the following:
information indicating the second transmission occasion; and
adjustment information for the time-frequency resource and/or the MCS of the second transmission occasion.

5. The method according to claim 4, wherein the information indicating the second transmission occasion comprises:
a CG index corresponding to the second transmission occasion; or
a hybrid automatic repeat request HARQ process number corresponding to the second transmission occasion; or
a position number of the second transmission occasion in the plurality of transmission occasions; or
a bitmap, wherein each bit in the bitmap corresponds to one of the plurality of transmission occasions, and a value of a bit corresponding to the second transmission occasion is a preset value.

6. The method according to claim 4 or 5, wherein the adjustment information for the time-frequency resource of the second transmission occasion comprises an index of a first adjustment rule, and the first adjustment rule is used for adjusting a time domain resource and/or a frequency domain resource of the second transmission occasion.

7. The method according to claim 6, wherein the method further comprises:
obtaining a plurality of adjustment rules, wherein the plurality of adjustment rules comprise the first adjustment rule.

8. The method according to any one of claims 4 to 7, wherein the adjustment information for the MCS of the second transmission occasion comprises:
an index of the adjusted MCS of the second transmission occasion; or
an offset between an index of the adjusted MCS of the second transmission occasion and an index of the MCS before the adjustment of the second transmission occasion.

9. The method according to claim 8, wherein the offset is less than or equal to an offset threshold.

10. The method according to any one of claims 1 to 9, wherein the indication information further indicates an adjustment to a time-frequency resource and/or an MCS of the first transmission occasion; and
the method further comprises: communicating with the access network device on the first transmission occasion based on an adjusted time-frequency resource and/or MCS of the first transmission occasion.

11. A communication method, wherein the method comprises:
determining a plurality of transmission occasions, wherein the plurality of transmission occasions comprise a first transmission occasion and a second transmission occasion, and the second transmission occasion is after the first transmission occasion;
receiving indication information from a terminal on the first transmission occasion, wherein the indication information indicates an adjustment to a time-frequency resource and/or a modulation and coding scheme MCS of the second transmission occasion; and
communicating with the terminal on the second transmission occasion based on an adjusted time-frequency resource and/or MCS of the second transmission occasion.

12. The method according to claim 11, wherein the plurality of transmission occasions are within one configured grant CG periodicity, or the plurality of transmission occasions are within a transmission periodicity of a data frame.

13. The method according to claim 12, wherein the first transmission occasion is a 1^{st} transmission occasion in the plurality of transmission occasions.

14. The method according to any one of claims 11 to 13, wherein the indication information comprises one or more of the following:
information indicating the second transmission occasion; and
adjustment information for the time-frequency resource and/or the MCS of the second transmission occasion.

15. The method according to claim 14, wherein the information indicating the second transmission occasion comprises:
a CG index corresponding to the second transmission occasion; or
a hybrid automatic repeat request HARQ process number corresponding to the second transmission occasion; or
a position number of the second transmission occasion in the plurality of transmission occasions; or
a bitmap, wherein each bit in the bitmap corresponds to one of the plurality of transmission occasions, and a value of a bit corresponding to the second transmission occasion is a preset value.

16. The method according to claim 14 or 15, wherein the adjustment information for the time-frequency resource of the second transmission occasion comprises an index of a first adjustment rule, and the first adjustment rule is used for adjusting a time domain resource and/or a frequency domain resource of the second transmission occasion.

17. The method according to claim 16, wherein the first adjustment rule is one of a plurality of adjustment rules.

18. The method according to any one of claims 14 to 17, wherein the adjustment information for the MCS of the second transmission occasion comprises:
an index of the adjusted MCS of the second transmission occasion; or
an offset between an index of the adjusted MCS of the second transmission occasion and an index of the MCS before the adjustment of the second transmission occasion.

19. The method according to claim 18, wherein the offset is less than or equal to an offset threshold.

20. The method according to any one of claims 11 to 19, wherein the indication information further indicates an adjustment to a time-frequency resource and/or an MCS of the first transmission occasion; and
the method further comprises: communicating with the terminal on the first transmission occasion based on an adjusted time-frequency resource and/or MCS of the first transmission occasion.

21. A communication apparatus, comprising a processor, wherein the processor is coupled to a memory, the memory stores a computer program, and the processor is configured to invoke the computer program in the memory, to enable the communication apparatus to perform the method according to any one of claims 1 to 10.

22. A communication apparatus, comprising a processor, wherein the processor is coupled to a memory, the memory stores a computer program, and the processor is configured to invoke the computer program in the memory, to enable the communication apparatus to perform the method according to any one of claims 11 to 20.

23. A communication apparatus, comprising a unit configured to perform the method according to any one of claims 1 to 10.

24. A communication apparatus, comprising a unit configured to perform the method according to any one of claims 11 to 20.

25. A computer-readable storage medium, wherein the storage medium stores a computer program or instructions, and when the computer program or the instructions are executed by a computer, the method according to any one of claims 1 to 10 or the method according to any one of claims 11 to 20 is implemented.

26. A computer program product, wherein when a computer reads and executes the computer program product, the computer is enabled to perform the method according to any one of claims 1 to 10 or the method according to any one of claims 11 to 20.

27. A communication system, wherein the communication system comprises a terminal and an access network device, the terminal is configured to perform the method according to any one of claims 1 to 10, and the access network device is configured to perform the method according to any one of claims 11 to 20.
